Europäisches Patentamt

(19) European Patent Office

Office européen des brevets

(11) Publication number: **0 148 548**
**B1**

(12) EUROPEAN PATENT SPECIFICATION

(45) Date of publication of patent specification: **23.11.88**

(51) Int. Cl.⁴: **C 08 F 12/06**, C 08 F 2/18

(21) Application number: **84300186.8**

(22) Date of filing: **12.01.84**

(54) Vinyl aromatic suspension polymerization.

(43) Date of publication of application:
**17.07.85 Bulletin 85/29**

(45) Publication of the grant of the patent:
**23.11.88 Bulletin 88/47**

(84) Designated Contracting States:
**BE DE FR GB NL SE**

(56) References cited:
**EP-A-0 031 635
FR-A-1 525 761
GB-A- 874 576
US-A-2 673 194**

(73) Proprietor: **ATLANTIC RICHFIELD COMPANY
Arco Plaza 515 S. Flower Street
Los Angeles California 90071 (US)**

(72) Inventor: **Wright, Harold Austin
3529 MacArthur Drive
Murrysville PA 15668 (US)**

(74) Representative: **Cropp, John Anthony David
et al
MATHYS & SQUIRE 10 Fleet Street
London, EC4Y 1AY (GB)**

Courier Press, Leamington Spa, England.

**Description**

The production of vinyl aromatic polymer beads, such as polystyrene beads, by aqueous suspension systems is a well-known and commercial practice. Such polymerizations can be effected by the suspension polymerization of a vinyl aromatic monomer in an aqueous medium using an oil-soluble polymerization catalyst, with a suspension system comprising a finely divided difficultly water-soluble inorganic phosphate, such as tricalcium phosphate, in conjunction with a modifier such as sodium dodecylbenzene sulfonate. Such suspension polymerization systems are described, for example, in Grim patent U.S. 2,673,194.

The suspension systems described in the Grim patent produce polymer beads having a broad particle size distribution, with average bead diameter being dependent upon the amount of suspending agent and type of modifier in the system. Although the average bead diameter can be somewhat controlled by varying parameters such as the ratio of suspending agent to modifier or the ratio of suspending agent and modifier to monomer, beads are still produced which have a broad bead size distribution. The production of beads which have a narrow size distribution is desired if they are to be used for molded foams. For molding thin-walled cups or foams with intricate surfaces, oversize foamed beads cannot be tolerated because they do not fill a mold properly. The result is a molding with holes and/or a rough surface. For molding 60 cm (two-foot) thick billets to be cut into insulation boards, oversized foamed beads can fill the molds readily. However, undersized foamed beads are objectionable because they inhibit the penetration of steam to the center of the billet. Center-cut boards from such billets exhibit poor bead-to-bead fusion and have little or no flexural strength. The customary ranges of bead sizes for typical applications are: cups, 0.59 mm to 0.297 mm (through 30 mesh on 50 mesh); packaging, 1.00 mm to 0.59 mm (through 18 mesh on 30 mesh); and billets, 2.34 mm to 0.84 mm (through 8 mesh on 20 mesh). Each application may require beads differing in molecular weight and in the incorporation of flame retardants, dyes, plasticizers, fast-molding agents, and cell-nucleating agents.

The median bead size and bead size distribution is normally determined by subjecting a sample to screen analysis using US Standard Sieves. The Distribution Index, DI, is then calculated as follows:

$$DI = \frac{\text{standard deviation (mm)}}{\text{median bead diameter (mm)}} \times 100$$

The lower the Distribution Index, the more narrow the bead size distribution and the less unwanted fines or larger beads produced.

Attempts to produce large-size beads with narrow bead size distribution ranges have been previously made and are continuing. Hohenstein et al., in US 2,672,392, reduced the amount of extremely fine beads by adding less than 0.01 percent based on the monomer of a water-soluble persulfate as modifier for the calcium phosphate stabilizer. In U.S. 3,631,014 narrow distribution of bead sizes larger than 300 µm (45 mesh) in diameter are produced by the addition of at least 0.0003 percent by weight based on monomer of sodium bisulfite as modifier for the phosphate. In U.S. 3,649,610 narrow distributions of bead sizes larger than 750 µm (25 mesh) in diameter are produced by adding at least 0.01 percent by weight based on monomer of certain terminal vicinal hydroxyketo compounds as a modifier for the phosphate. In U.S. 3,755,282 narrow distributions of bead sizes larger than 1200 µm (16 mesh) in diameter are produced by adding at least 0.0001 percent by weight based on monomer of αβ-unsaturated carboxylic acids as modifier for the phosphate. In U.S. 4,170,699, bead size distribution is improved for beads larger than 300 µm (45 mesh) by the use of a bisulfite or persulfate modifier in the presence of glutamic acid as an adjunct modifier.

We have now discovered that by the addition of a sodium polystyrenesulfonate to an inorganic phosphate suspension system, narrow bead size distribution can be effected and the production of large spherical beads, greater than 1000 µm (18 mesh), is possible with improved bead spericity.

EP—A—0031635 proposes the acid form of sulfonated poly(p - methylstyrene) as an extender in an aqueous suspension polymerisation process, which is specific to para-methylstyrene.

FR—A—1525761 describes a process involving the joint use of a finely divided and difficultly water-soluble phosphate and an alkali metal sulfonate such as sodium p-vinylbenzene sulfonate.

GB—A—874576 discloses the use of a wide range of sulfonated vinylidene aromatic polymers and salts thereof, containing on average from 0.5 to 1.0 sulfonic acid groups per each monomer unit as the primary suspending agent.

The use of sodium polystyrenesulfonate has been suggested as a sole suspending agent for vinyl monomers in British patent 802,062. However, it is surprising that use of a few parts per million of such a material in conjunction with a phosphate suspension system would provide any unusual benefits, such as a narrow bead size distribution or maintenance of sphericity of large-size beads.

According to the present invention there is provided a process for producing polymer beads by suspending monomeric material comprising vinyl aromatic monomer containing a monomer-soluble, free-radical-producing catalyst in an aqueous medium, with the aid of from 0.1 to 4.0 percent by weight based on monomer of a finely divided, difficultly water-soluble phosphate suspending agent and subjecting the suspension to an elevated temperature to cause said monomer to polymerise; characterised in that large sized spherical polymer beads having a narrow distribution of bead diameter sizes are obtained by adding to said suspension between 0.0001 and 0.004 percent by weight, based on monomer, of a sodium polystyrenesulfonate comprising a sulfonated polystyrene which has molecular weight between 20,000 to 500,000.

The present invention is useful in the suspension polymerization of vinyl aromatic monomers such as styrene, paramethylstyrene, mono- and dichlorostyrene, as well as the copolymerisation of vinyl aromatic monomers with such monomers as divinylbenzene, an alkyl acrylate, allyl acrylate, an alkyl methacrylate, allyl methacrylate, a diallyl ester of a dibasic aliphatic acid, a diallyl ester of a dibasic aromatic acid, butadiene, and polymers capable of further polymerisation such as styrene-butadiene, styrene-isoprene, and polybutadiene rubbers.

The finely divided, difficultly water-soluble phosphates useful as dispersing agents in the practice of this invention are conventional and are those described, for example, in Grim U.S. Patent No. 2,673,194. They include those finely divided phosphates difficultly soluble in water containing for each phosphate group at least three equivalents of a metal, the carbonate of which is only slightly soluble in water, e.g., tricalcium phosphate, hydroxy-apatite, magnesium phosphate, etc. The amount of phosphate to be employed in this invention ranges from 0.1 to 4.0% by weight based on monomer. Preferably, the phosphate is used in an amount of between 0.2 to 1.2% by weight based on the monomer. The average particle size of polymer beads produced in the suspension polymerization is effected by the total amount of phosphate suspending agent; for example, suspension with larger amounts of phosphate suspending agent yields beads of a smaller average particle size.

There is added to the aqueous suspension, in addition to the phosphate suspending agent, between 0.0001 to 0.004 percent by weight, based on monomer, of a sodium polystyrenesulfonate. The use of less than 0.0001 percent by weight will not give the desired suspension while use of greater than 0.004 shows no improvement over lower amounts. Preferably, the sodium polystyrenesulfonate is added in an amount of about 0.0005 percent by weight, based on the monomer.

The sodium polystyrenesulfonates usable in the present invention are those wherein the linear polystyrene has a molecular weight in the range of 20,000 to 500,000. Use of polystyrenes having molecular weights in excess of about 500,000 results in the production of smaller bead sizes and broader bead size distributions. Such are formed preferably as sodium salts of polystyrene sulfonic acid. The degree of sulfonation of the linear polystyrenes may vary from about 50 percent to 100 percent, i.e., one sulfonate group per styrene group, with substantially 100 percent sulfonation being preferred. Suitable commercial sodium polystyrenesulfonates are produced by National Starch and Chemical Co. under the trademark Versa-TL®: for example, Versa-TL #70, a substantially 100 percent sulfonated polystyrene having a molecular weight of about 70,000; Versa-TL #47, a substantially 100 percent sulfonated polystyrene having a molecular weight of about 40,000; and Versa-TL #500, a substantially 100 percent sulfonated polystyrene having a molecular weight of about 500,000.

The time and temperature cycles for the polymerization may be those conventionally used. Conveniently, the cycles described in the Grim patent, referred to above, or the two-stage temperature cycle described by D'Alelio, U.S. 2,692,260, is used. The process may be used with monomer to water ratios which vary from about 0.3 to 1.5 parts by weight monomer per 1 part by weight of water.

The invention is further illustrated by reference to the following examples, wherein parts are parts by weight unless otherwise indicated.

Example I

To a series of 350 cm³ (12-oz.) crown-cap bottles there was charged 100 g water, the amount of tricalcium phosphate (TCP), and the amount of sodium polystyrenesulfonate (SPS) listed in the following Table. The sodium polystyrenesulfonate used was a sodium salt of polystyrenesulfonic acid, Versa-TL #70* (a substantially 100 percent sulfonated polystyrene having a molecular weight of about 70,000). To this aqueous mixture there was added 100 g. of styrene containing 0.25 g benzoyl peroxide and 0.05 g. t-butyl perbenzoate. The bottles were sealed and heated with end-over-end agitation for a period of 6 hours at 90°C. to form hard polymer beads. The bottles were cooled to room temperature and the aqueous slurry was then acidified to a pH of about 1.0 to dissolve the phosphate. The resultant beads were separated, washed with water and air dried. The dried beads were subjected to screen analysis using U.S. Standard Sieves to determine median bead size and standard deviation from the median size. The results are shown in Table I:

* Versa-TL may be a Registered Trade Mark in one or more of the territories designated by this application.

# EP 0 148 548 B1

TABLE I

| Run No. | Stabilizers | | Product | | |
| | TCP (%) | SPS (%) | Median size | | DI (%) |
| | | | mm | mesh | |
|---|---|---|---|---|---|
| 1 | 0.25 | 0.001 | 1.967 | 10 | 21.8 |
| 2 | 0.30 | 0.0001 | 1.908 | 10.5 | 22.5 |
| 3 | 0.30 | 0.0005 | 1.460 | 13.5 | 25.2 |
| 4 | 0.30 | 0.0010 | 1.681 | 12 | 24.0 |
| 5 | 0.30 | 0.0020 | 2.341 | 8 | 25.3 |
| 6 | 0.35 | 0.0001 | 2.268 | 8 | 20.7 |
| 7 | 0.35 | 0.0005 | 1.160 | 16.5 | 29.1 |
| 8 | 0.35 | 0.0010 | 1.501 | 13.5 | 26.2 |
| 9 | 0.35 | 0.0020 | 1.832 | 11 | 24.3 |
| 10 | 0.40 | 0.0001 | 2.206 | 9 | 20.5 |
| 11 | 0.40 | 0.0005 | 1.002 | 18 | 27.7 |
| 12 | 0.40 | 0.0010 | 1.293 | 15 | 32.5 |
| 13 | 0.20 | 0.0005 | 2.285 | 8 | 21.4 |
| 14 | 0.25 | 0.0005 | 2.031 | 10 | 23.9 |
| 15 | 0.25 | 0.0010 | 1.950 | 10.5 | 21.8 |
| 16 | 0.40 | 0.0020 | 1.639 | 12.5 | 25.3 |
| 17 | 0.50 | 0.0005 | 1.036 | 17.5 | 31.8 |
| 18 | 0.50 | 0.0010 | 0.764 | 24 | 28.9 |
| 19 | 0.50 | 0.0020 | 1.316 | 15 | 28.1 |
| 20 | 0.60 | 0.0010 | 0.735 | 25 | 27.8 |
| 21 | 0.60 | 0.0020 | 0.892 | 20 | 37.3 |

Beads produced which were larger 1.967 mm (10 mesh) using the Versa-TL #70, were essentially spherical.

Example II

A series of further runs were made using the procedure of Example I, with 0.60 g tricalcium phosphate (TCP) used in each run and varying the type and amount of sodium polystyrenesulfonate. Type 70 was Versa-TL #70; Type 121 was the same as Type 70 except that the polystyrene had a molecular weight of about 120,000; and Type 500 was the same as Type 70 except that the polystyrene had a molecular weight of about 500,000. The results are shown in Table II:

# EP 0 148 548 B1

TABLE II

| Run No. | Sodium polystyrenesulfonate | | Product | | |
| | Type | (%) | Median size | | DI (%) |
| | | | mm | mesh | |
|---|---|---|---|---|---|
| 1 | 70 | 0.0002 | 1.666 | 12 | 21.0 |
| 2 | 70 | 0.0004 | 1.244 | 16 | 24.4 |
| 3 | 70 | 0.0006 | 1.069 | 17.5 | 27.1 |
| 4 | 121 | 0.0002 | 1.374 | 14.5 | 21.9 |
| 5 | 121 | 0.0004 | 1.000 | 18 | 27.6 |
| 6 | 121 | 0.0006 | 0.756 | 23 | 28.3 |
| 7 | 500 | 0.0002 | 1.248 | 16 | 25.8 |
| 8 | 500 | 0.0004 | 0.799 | 21 | 27.0 |
| 9 | 500 | 0.0006 | 0.704 | 25 | 35.3 |

As can be seen by the results, the use of a higher molecular weight polystyrenesulfonate produces smaller size beads, while the use of larger amounts of a particular polystyrenesulfonate also results in a reduction in bead sizes.

Example III

To a 379 dm³ (100-gallon) stirred tank reactor there was charged 181 kg (400 lbs) of water, 0.91 kg (2 lbs) of tricalcium phosphate, 1.09 g (0.0024 lb) of Versa-TL #70 (sodium polystyrenesulfonate), 181 kg (400 lbs) of styrene, 0.62 kg (1.36 lb) of benzoyl peroxide, and 0.09 kg (0.2 lb) of t-butyl perbenzoate. The reactor was sealed and the contents heated, with agitation, at 73 revolutions per minute to and at 90°C for 5 hours to form hard beads. The bead sizes were determined by sieve analysis to be:

| US sieve no. | Particle size | Percentage retained on each sieve |
|---|---|---|
| on 8-mesh | >2.38 mm | 2.3 |
| on 10-mesh | >2.00 mm | 1.5 |
| on 16-mesh | >1.19 mm | 60.2 |
| on 20-mesh | >0.84 mm | 32.6 |
| on 25-mesh | >0.71 mm | 2.4 |
| on 35-mesh | >0.5 mm | 0.6 |
| on pan | | 0.2 |

The yield of beads that could be used for billet molding was at least 99%, excluding those that passed a 0.50 mm (35 mesh) or 96%, excluding those that passed a 0.892 mm (20 mesh) sieve. Of special interest was the fact that the largest (i.e. on 8 mesh) 2.84 mm beads were all spherical in shape.

Other suspension systems (i.e. modified calcium phosphates or water soluble polymers such as hydroxyethylcellulose, polyvinylpyrrolidone or polyvinyl alcohol), that have been tested for making such large beads either fail to suspend the monomer beyond about 60% conversion or produce some off-round particles shaped like discs, eggs or beans, in that portion of the product that is retained on 12 mesh sieve; equivalent to a particle size above 1.67 mm.

**Claims**

1. A process for producing polymer beads by suspending monomeric material comprising vinyl

5

aromatic monomer containing a monomer-soluble, free-radical-producing catalyst in an aqueous medium, with the aid of from 0.1 to 4.0 percent by weight based on monomer of a finely divided, difficultly water-soluble phosphate suspending agent and subjecting the suspension to an elevated temperature to cause said monomer to polymerise; characterised in that large sized spherical polymer beads having a narrow distribution of bead diameter sizes are obtained by adding to said suspension between 0.0001 and 0.004 percent by weight, based on monomer, of a sodium polystyrenesulfonate comprising a sulfonated polystyrene which has molecular weight between 20,000 to 500,000.

2. The process as defined in claim 1 characterised in that said phosphate suspending agent is tricalcium phosphate.

3. A process as defined in claim 2 characterised in that said tricalcium phosphate is present in an amount of 0.2 to 1.2 percent by weight based on monomer.

4. The process as defined in claim 1 characterised in that said sodium polystyrenesulfonate is a substantially 100 percent sulfonated polystyrene.

5. The process as defined in any one of claims 1 to 4 characterised in that said sodium polystyrenesulfonate is present in an amount of about 0.0005 percent by weight.

6. The process as defined in any one of claims 1 to 5 characterised in that said vinyl aromatic monomer is selected from the group consisting of styrene, para-methylstyrene, monochlorostyrene, and dichlorostyrene.

7. The process as defined in claim 6 characterised in that said vinyl aromatic monomer is copolymerised with a monomer selected from divinylbenzene, alkyl acrylates, allyl acrylate, alkyl methacrylates, allyl methacrylate, diallyl esters of dibasic aliphatic acids, diallyl esters of dibasic aromatic acids, butadiene, and polymers capable of further polymerisation selected from styrene-butadiene rubbers, styrene-isoprene rubbers, and polybutadiene rubbers.

8. The process as defined in any one of claims 1 to 7 characterised in that said polymerisation produces beads having an average particle size greater than 1000 μm.

9. A process as defined in any one of claims 1 to 3, 5, 6 and 8 for producing polystyrene beads from styrene wherein the sodium polystyrenesulfonate is between 50 and 100 percent sulfonated.

**Patentansprüche**

1. Verfahren zur Herstellung von Polymerkügelchen, bei dem man monomeres Material, das phenylaromatisches Monomer enthält, das einen monomerlöslichen, freie Radikale erzeugenden Katalysator enthält, in einem wässrigem Medium, mit Hilfe von 0,1 bis 4,0 Gew.-%, bezogen auf das Monomer, eines feinverteilten, schwer wasserlöslichen Phosphatsuspensionsmittels suspendiert und die Suspension einer erhöhten Temperatur unterwirft um die Polymerisation des Monomers zu bewirken, dadurch gekennzeichnet, daß man große sphärische Polymerkügelchen mit einer engen Verteilung der Kügelchendurchmesser durch Zugabe zu der Suspension zwischen 0,0001 und 0,004 Gew.-%, bezogen auf das Monomer, eines Natriumpolystyrolsulfonates, das ein sulfoniertes Polystyrol mit einem Molekulargewicht zwischen 20000 bis 500000 enthält, erhält.

2. Verfahren nach Anspruch 1, dadurch gekennzeichnet, daß das Phosphatsuspensionsmittel Tricalciumphosphat ist.

3. Verfahren nach Anspruch 2, dadurch gekennzeichnet, daß das Tricalciumphosphat in einer Menge von 0,2 bis 1,2 Gew.-%, bezogen auf das Monomer, vorhanden ist.

4. Verfahren nach Anspruch 1, dadurch gekennzeichnet, daß das Natriumpolystyrolsulfonat ein im wesentlichen 100% sulfoniertes Polystyrol ist.

5. Verfahren nach einem der Ansprüche 1 bis 4, dadurch gekennzeichnet, daß das Polystyrolsulfonat in einer Menge von etwa 0.0005 Gew.-% vorhanden ist.

6. Verfahren nach einem der Ansprüche 1 bis 5, dadurch gekennzeichnet, daß das vinylaromatische Monomer aus der Gruppe bestehend aus Styrol, p-Methylstyrol, Monochlorstyrol und Dichlorstyrol, ausgewählt wird.

7. Verfahren nach Anspruch 6, dadurch gekennzeichnet, daß das vinylaromatische Monomer mit einem Monomer copolymerisiert wird, das aus Divinylbenzol, Alkylacrylaten, Allylacrylat, Alkylmethacrylaten, Allylmethacrylat, Diallylester von dibasischen aliphatischen Säuren, Diallylester von dibasischen aromatischen Säuren, Butadien und Polymeren, die zur weiteren Polymerisation in der Lage sind, ausgewählt aus Styrol-Butadien Kautschuk, Styrol-Isopren Kautschuk und Polybutadien Kautschuk, ausgewählt wird.

8. Verfahren nach einem der Ansprüche 1 bis 7, dadurch gekennzeichnet, daß die Polymerisation Kügelchen mit einer durchschnittlichen Teilchengröße von größer als 1000 μm ergibt.

9. Verfahren nach einem der Ansprüche 1 bis 3, 5, 6, und 8 zur Herstellung von Polystyrolkügelchen aus Styrol, bei dem das Natriumpolystyrolsulfonat zwischen 50 und 100% sulfoniert ist.

**Revendications**

1. Procédé pour produire des billes de polymères selon lequel on met en suspension une substance monomérique comprenant un monomère aromatique vinylique contenant un catalyseur soluble dans le monomère, produisant des radicaux libres dans un milieu aqueux, à l'aide de 0,1 à 4,0% en poids par rapport au monomère d'un agent de suspension au phosphate finement divisé et difficilement soluble dans l'eau et l'on soumet cette suspension à une température élevée pour provoquer la polymérisation du monomère, caractérisé en ce qu'on obtient des billes de polymère sphériques de grande dimension dont la distribution des dimensions du diamètre des billes est étroite, en ajoutant à cette suspension de 0,0001 à 0,004% en poids par rapport au monomère, d'un polystyrènesulfonate de sodium comprenant un polystyrène sulfoné qui a un poids moléculaire compris entre 20,000 et 500,000.

2. Procédé suivant la revendication 1, caractérisé en ce que cet agent de suspension au phosphate est le phosphate tricalcique.

3. Procédé suivant la revendication 2, caractérisé en ce que ce phosphate tricalcique est présent en une quantité de 0,2 à 1,2% en poids par rapport au monomère.

4. Procédé suivant la revendication 1, caractérisé en ce que ce polystyrènesulfonate de sodium est un polystyrène sulfoné pratiquement à 100%.

5. Procédé suivant l'une quelconque des revendications 1 à 4, caractérisé en ce que ce polystyrènesulfonate de sodium est présent en une quantité d'environ 0,0005% en poids.

6. Procédé suivant l'une quelconque des revendications 1 à 5, caractérisé en ce que ce monomère aromatique vinylique est choisi dans le groupe comprenant le styrène, le para-méthylstyrène, le monochlorostyrène et le dichlorostyrène.

7. Procédé suivant la revendication 6, caractérisé en ce que ce monomère aromatique vinylique est copolymérisé avec un monomère choisi parmi le divinylbenzène, des acrylates d'alcoyle, l'acrylate d'allyle, des méthacrylates d'alcoyle, le méthacrylate d'allyle, des esters diallyliques de diacides aliphatiques, des esters diallyliques de diacides aromatiques, le butadiène, et des polymères capables de subir une polymérisation ultérieure choisi parmi des caoutchoucs de styrène-butadiène, des caoutchoucs de styrène-isoprène et des caoutchoucs de polybutadiène.

8. Procédé suivant l'une quelconque des revendications 1 à 7, caractérisé en ce que cette polymérisation produit des billes ayant une dimension particulaire moyenne supérieure à 1000 μm.

9. Procédé suivant l'une quelconque des revendications 1 à 3, 5, 6 et 8 pour produire des billes de polystyrène à partir du styrène, caractérisé en ce que le taux de sulfonation du polystyrènesulfonate de sodium est compris entre 50 et 100%.